# EUROPEAN PATENT APPLICATION

(11) **EP 4 815 083 A1**
(43) Date of publication of application: **30.09.2026**
(21) Application number: 24903660.9
(22) Date of filing: 10.12.2024
(51) Int. Cl.: H01M 10/052, H01M 4/36, H01M 4/58, H01M 10/0568

(54) **NON-AQUEOUS ELECTROLYTE POWER STORAGE ELEMENT AND PRODUCTION METHOD FOR SAME**

(30) Priority: 12.12.2023 JP 2023209685
(71) Applicant: GS Yuasa International Ltd., Kisshoin, Minami-ku, Kyoto-shi, Kyoto 601-8520 (JP)
(72) Inventor: OKUBO, Takashi, Kyoto-shi, Kyoto 601-8520 (JP); WAKAMATSU, Hideaki, Kyoto-shi, Kyoto 601-8520 (JP)
(74) Representative: Isarpatent
(86) International application number: PCT/JP2024/043497
(87) International publication number: WO 2025/127006

(57) **Abstract**

A non-aqueous electrolyte energy storage device according to one aspect of the present invention includes a positive electrode containing positive electrode active material particles including a compound having an olivine-type crystal structure, and a non-aqueous electrolyte containing a salt having an oxalato complex anion, wherein a D50 particle size of the positive electrode active material particles is 3 µm or less, and a BET specific surface area of the positive electrode active material particles is 10 m²/g or less.

## Description

### TECHNICAL FIELD

The present invention relates to a non-aqueous electrolyte energy storage device and a method for manufacturing the non-aqueous electrolyte energy storage device.

### BACKGROUND ART

Non-aqueous electrolyte secondary batteries, typified by lithium-ion secondary batteries, are widely used in electronic devices such as personal computers and communication terminals, and in automobiles and the like, owing to their high energy density. Generally, the non-aqueous electrolyte secondary battery includes a pair of electrodes electrically isolated from each other by a separator and a non-aqueous electrolyte interposed between the electrodes, and is configured to be charged and discharged by transfer of charge-transporting ions between the two electrodes. In addition, capacitors such as a lithium-ion capacitor and an electric double-layer capacitor are also in widespread use as non-aqueous electrolyte energy storage devices other than non-aqueous electrolyte secondary batteries.

As a positive electrode active material used for the non-aqueous electrolyte energy storage device, a compound having an olivine-type crystal structure, such as lithium iron phosphate, is known. Patent Literature 1 describes a non-aqueous electrolyte secondary battery including a positive electrode containing lithium iron phosphate as a positive electrode active material and a negative electrode containing graphite as a negative electrode active material.

### CITATION LIST

### Patent Literature

Patent Literature 1: Japanese Unexamined Patent Application Publication No. 2007-213961

### DISCLOSURE OF INVENTION

### PROBLEMS TO BE SOLVED BY THE INVENTION

It is desirable for the non-aqueous electrolyte energy storage device to have low resistance from the viewpoint of output performance and the like. In particular, a non-aqueous electrolyte energy storage device in which lithium iron phosphate is used as a positive electrode active material and in which graphite is used as a negative electrode active material has an operating voltage comparable to that of a lead-acid battery, and thus is sometimes used as a substitute for an automotive lead-acid battery. In a non-aqueous electrolyte energy storage device serving as a substitute for an automotive lead-acid battery, a reduction in resistance is also desirable because it is important that a cold cranking ampere (CCA) value be high.

An object of the present invention is to provide a non-aqueous electrolyte energy storage device in which a compound having an olivine-type crystal structure is used and which has a low resistance, and a method for manufacturing such a non-aqueous electrolyte energy storage device.

### MEANS FOR SOLVING THE PROBLEMS

A non-aqueous electrolyte energy storage device according to one aspect of the present invention includes a positive electrode containing positive electrode active material particles including a compound having an olivine-type crystal structure, and a non-aqueous electrolyte containing a salt having an oxalato complex anion, wherein a D50 particle size of the positive electrode active material particles is 3 µm or less, and a BET specific surface area of the positive electrode active material particles is 10 m²/g or less.

A method for manufacturing a non-aqueous electrolyte energy storage device according to another aspect of the present invention includes: obtaining positive electrode active material particles having a D50 particle size of 3 µm or less and a BET specific surface area of 10 m²/g or less by pulverizing secondary particles of a positive electrode active material including a compound having an olivine-type crystal structure; producing a positive electrode containing the positive electrode active material particles; and preparing a non-aqueous electrolyte containing a salt having an oxalato complex anion.

### EFFECT OF THE INVENTION

According to any one aspect of the present invention, it is possible to provide a non-aqueous electrolyte energy storage device in which a compound having an olivine-type crystal structure is used and which has a low resistance, and a method for manufacturing such a non-aqueous electrolyte energy storage device.

### BRIEF DESCRIPTION OF DRAWINGS

FIG. 1 is a see-through perspective view illustrating an embodiment of a non-aqueous electrolyte energy storage device.
FIG. 2 is a schematic view illustrating an embodiment of an energy storage apparatus configured by assembling a plurality of non-aqueous electrolyte energy storage devices.

### DESCRIPTION OF EMBODIMENTS

First, an outline of a non-aqueous electrolyte energy storage device and a method for manufacturing the device disclosed in the present specification will be described.
[1] A non-aqueous electrolyte energy storage device according to one aspect of the present invention includes a positive electrode containing positive electrode active material particles including a compound having an olivine-type crystal structure, and a non-aqueous electrolyte containing a salt having an oxalato complex anion, wherein a D50 particle size of the positive electrode active material particles is 3 µm or less, and a BET specific surface area of the positive electrode active material particles is 10 m²/g or less.

The non-aqueous electrolyte energy storage device described in [1] above is a non-aqueous electrolyte energy storage device in which a compound having an olivine-type crystal structure is used, and has a low resistance. Although the reason for this is not clear, the following factors are presumed. Generally, a charge-transporting ion (such as a lithium ion) in a compound having an olivine-type crystal structure moves only along a crystal axis of the olivine-type crystal structure. For this reason, in a case where the positive electrode active material particles are in a form of secondary particles formed by aggregation of a large number of primary particles, a distance over which charge-transporting ions can move linearly becomes short, and it is considered that an ion transport resistance increases. Therefore, it is desirable for the compound having an olivine-type crystal structure to be used in a form as close as possible to primary particles (a form in which each particle is formed of as few primary particles as possible). Here, it is considered that a primary particle diameter of the positive electrode active material particles and the BET specific surface area thereof have a negative correlation. Therefore, the fact that the D50 particle size of the positive electrode active material particles is small and the BET specific surface area thereof is small means that a secondary particle diameter is small and the primary particle diameter is large, and that each particle (usually, a secondary particle) is formed of a relatively small number of primary particles. In the non-aqueous electrolyte energy storage device described in [1] above, since the D50 particle size of the positive electrode active material particles is 3 µm or less and the BET specific surface area of the positive electrode active material particles is 10 m²/g or less, each particle is formed of a relatively small number of primary particles, and it is considered that the ion transport resistance is reduced. Further, in the non-aqueous electrolyte energy storage device described in [1] above, the non-aqueous electrolyte contains a salt having an oxalato complex anion. In the non-aqueous electrolyte energy storage device described in [1] above, it is considered that the resistance is further reduced by forming a favorable film derived from the salt on surfaces of the positive electrode active material particles. In particular, the positive electrode active material particles including a compound having an olivine-type crystal structure generally have surfaces coated with a carbon material in order to increase electronic conductivity. In addition, the positive electrode active material particles formed of a relatively small number of primary particles can be suitably obtained by a pulverization treatment, as will be described in detail below. However, when the positive electrode active material particles are formed by pulverization, a portion where the compound having an olivine-type crystal structure is exposed without being coated with the carbon material is likely to occur. Therefore, it is considered that the resistance is reduced by covering this exposed portion with the film derived from the salt. As described above, in the non-aqueous electrolyte energy storage device described in [1] above, it is presumed that the resistance is reduced because the ion transport resistance of the positive electrode active material particles is reduced by the D50 particle size of the positive electrode active material particles being 3 µm or less and the BET specific surface area thereof being 10 m²/g or less, and because a favorable film derived from the salt having an oxalato complex anion is formed on the surfaces of the positive electrode active material particles.

A salt contained in the non-aqueous electrolyte is qualitatively and quantitatively analyzed by ion chromatography (IC). As an apparatus for the IC analysis, a "Dionex ICS-5000+" manufactured by Thermo Fisher Scientific Inc. is used. Water is used as an eluent. Specifically, it is performed as follows. In addition, a series of measurements shall be performed continuously under identical conditions.

First, the non-aqueous electrolyte energy storage device is disassembled to take out the non-aqueous electrolyte. If the non-aqueous electrolyte cannot be taken out, the non-aqueous electrolyte is taken out by subjecting the non-aqueous electrolyte energy storage device to centrifugation. If the non-aqueous electrolyte cannot be taken out even by centrifugation, a suitable solvent (for example, acetonitrile or the like) is injected into the non-aqueous electrolyte energy storage device, and the non-aqueous electrolyte diluted with the extraction solvent is taken out. The non-aqueous electrolyte may be completely dissolved using a suitable solvent (for example, acetonitrile or the like).

### (Qualitative Analysis)

A measurement sample (non-aqueous electrolyte) is subjected to IC analysis. Constituents contained in the measurement sample are predicted from peak positions of respective peaks in an obtained ion chromatogram. A known sample of each predicted constituent (hereinafter referred to as a "predicted constituent") is subjected to IC analysis. A retention time of a peak corresponding to the predicted constituent in each of the peaks of the measurement sample is compared with a retention time of the known sample, and the above prediction is presumed to be correct.

### (Quantitative Analysis)

The quantitative analysis is performed by a calibration curve method. First, IC measurement is performed on a known sample of the predicted constituent having a known concentration, and a peak area is determined to create a calibration curve. The calibration curve is created such that a coefficient of determination (r²) is 0.99 or more and 1 or less. The content of the predicted constituent in the measurement sample is obtained from the calibration curve and the peak area of the predicted constituent in the measurement sample. The operation described above is performed for all of the peaks detected in the IC analysis of the measurement sample, and the content of each of the predicted constituents is obtained.

The "D50 particle size" of the positive electrode active material particles (the same applies to a "D90 particle size" and a "D10 particle size" to be described below) and the "BET specific surface area" thereof are values measured for positive electrode active material particles taken out from a non-aqueous electrolyte energy storage device and treated by the following procedure. First, the non-aqueous electrolyte energy storage device is subjected to constant-current discharge at a current of 0.1 C to a discharge cutoff voltage during normal use. Here, normal use refers to a case where the non-aqueous electrolyte energy storage device is used by adopting charge-discharge conditions recommended or specified for the non-aqueous electrolyte energy storage device. The non-aqueous electrolyte energy storage device in this state is disassembled, a positive electrode is taken out, and the positive electrode is sufficiently washed with dimethyl carbonate to remove a constituent (non-aqueous electrolyte or the like) adhering to the positive electrode. Thereafter, the positive electrode is dried under reduced pressure at room temperature for 24 hours. Next, powder of a positive electrode active material layer is collected from the positive electrode. After an arbitrary constituent such as a conductive agent mixed in the powder of the positive electrode active material layer is removed using air classification or the like, washing and filtration are performed using a solvent in which a binder and a thickener are soluble to remove the binder and the thickener, thereby obtaining positive electrode active material particles. Finally, the obtained positive electrode active material particles are heated and dried to collect a sample to be measured. A heating temperature may be any temperature at which the solvent can be removed, and can be, for example, 60 °C to 100 °C. Steps from the disassembly of the non-aqueous electrolyte energy storage device to the collection of the sample to be measured can be performed in an argon atmosphere having a dew point of -60 °C or lower as necessary.

The "D50 particle size" of the positive electrode active material particles is a value at which a volume-based cumulative distribution calculated in accordance with JIS-Z-8819-2 (2001) is 50%, based on a particle size distribution measured by a laser diffraction-scattering method in accordance with JIS-Z-8825 (2013) on a diluted liquid obtained by diluting the particles with a solvent. The "D90 particle size" of the positive electrode active material particles is a value at which the volume-based cumulative distribution obtained in the same manner is 90%. The "D10 particle size" of the positive electrode active material particles is a value at which the volume-based cumulative distribution obtained in the same manner is 10%.

The "BET specific surface area" of the positive electrode active material particles is a value obtained by measurement in the following procedure. 1.00 g of the positive electrode active material particles is placed in a sample tube for measurement, and dried under reduced pressure at 120 °C for 12 hours. Next, by a nitrogen-gas adsorption method using liquid nitrogen, an adsorption isotherm is measured within a relative pressure P/P0 (P0 = approximately 770 mmHg) range of 0 to 1. Five points are extracted from a region of the obtained adsorption isotherm where P/P0 is from 0.05 to 0.3 to perform BET plotting, and the BET specific surface area is calculated from a y-intercept and a slope of the plotted straight line.

[2] In the non-aqueous electrolyte energy storage device described in [1] above, the D90 particle size of the positive electrode active material particles may be 8 µm or less.

The non-aqueous electrolyte energy storage device described in [2] above has a lower resistance because the number of positive electrode active material particles having a large secondary particle diameter and formed from a large number of primary particles is small.

[3] In the non-aqueous electrolyte energy storage device described in [1] or [2] above, the positive electrode active material particles may include a carbon material present on at least part of surfaces thereof.

The non-aqueous electrolyte energy storage device described in [3] above has a lower resistance because electronic conductivity of the positive electrode active material particles is enhanced by the carbon material.

[4] In the non-aqueous electrolyte energy storage device described in any one of [1] to [3] above, the compound having an olivine-type crystal structure may be lithium iron phosphate.

The non-aqueous electrolyte energy storage device described in [4] above is a preferred embodiment of the present invention.

[5] In the non-aqueous electrolyte energy storage device described in any one of [1] to [4] above, the salt having an oxalato complex anion may be lithium difluorobis(oxalato)phosphate.

The non-aqueous electrolyte energy storage device described in [5] above is a preferred embodiment of the present invention.

[6] In the non-aqueous electrolyte energy storage device described in any one of [1] to [5] above, the positive electrode active material particles may be a pulverized product.

[7] In the non-aqueous electrolyte energy storage device described in any one of [1] to [6] above, the non-aqueous electrolyte may further include at least one selected from the group consisting of an unsaturated cyclic carbonate and an imide salt.

[8] In the non-aqueous electrolyte energy storage device described in any one of [1] to [6] above, the non-aqueous electrolyte may further include at least one selected from the group consisting of vinylene carbonate and lithium difluorophosphonylfluorosulfonylimide.

[9] The non-aqueous electrolyte energy storage device described in any one of [1] to [8] above may further include a negative electrode containing a carbon material.

[10] The non-aqueous electrolyte energy storage device described in any one of [1] to [8] above may further include a negative electrode containing graphite.

The non-aqueous electrolyte energy storage devices described in [6] to [10] above are also preferred embodiments of the present invention.

[11] A method for manufacturing a non-aqueous electrolyte energy storage device according to another aspect of the present invention includes: obtaining positive electrode active material particles having a D50 particle size of 3 µm or less and a BET specific surface area of 10 m²/g or less by pulverizing secondary particles of a positive electrode active material including a compound having an olivine-type crystal structure; producing a positive electrode containing the positive electrode active material particles; and preparing a non-aqueous electrolyte containing a salt having an oxalato complex anion.

According to the method for manufacturing a non-aqueous electrolyte energy storage device described in [11] above, it is possible to obtain a non-aqueous electrolyte energy storage device in which a compound having an olivine-type crystal structure is used and which has a low resistance.

A non-aqueous electrolyte energy storage device, an energy storage apparatus, a method for manufacturing a non-aqueous electrolyte energy storage device, each according to one embodiment of the present invention, and other embodiments will be described in detail. The names of constituent members (constituent elements) used in each embodiment may be different from the names of constituent members (constituent elements) used in the background art.

### <Non-aqueous Electrolyte Energy Storage Device>

A non-aqueous electrolyte energy storage device according to an embodiment of the present invention (hereinafter, also simply referred to as an "energy storage device") includes: an electrode body having a positive electrode, a negative electrode, and a separator; a non-aqueous electrolyte; and a container for housing the electrode body and the non-aqueous electrolyte. The electrode body is usually of a stacked type in which a plurality of positive electrodes and a plurality of negative electrodes are stacked with separators interposed therebetween, or of a wound type in which a positive electrode and a negative electrode are wound in a state of being stacked with a separator interposed therebetween. At least a part of the non-aqueous electrolyte exists in a state of penetrating into gaps of the positive electrode, the negative electrode, and the separator. As an example of the non-aqueous electrolyte energy storage device, a non-aqueous electrolyte secondary battery (hereinafter, also simply referred to as a "secondary battery") will be described.

### (Positive Electrode)

The positive electrode includes a positive electrode substrate and a positive electrode active material layer disposed on the positive electrode substrate directly or via an intermediate layer.

The positive electrode substrate has conductivity. Whether or not the positive electrode substrate has "conductivity" is determined based on a volume resistivity measured in accordance with JIS-H-0505 (1975), with 10⁻² Ω·cm used as a threshold value. As the material of the positive electrode substrate, a metal such as aluminum, titanium, tantalum, or stainless steel, or an alloy thereof is used. Among the above, aluminum or an aluminum alloy is preferable from the viewpoint of potential resistance, high conductivity, and cost. Examples of the positive electrode substrate include a foil, a vapor-deposited film, a mesh, a porous material, and the like, and a foil is preferable from the viewpoint of cost. Therefore, an aluminum foil or an aluminum alloy foil is preferable as the positive electrode substrate. Examples of the aluminum or aluminum alloy include A1085, A3003, A1N30, and the like specified in JIS-H-4000 (2014) or JIS-H-4160 (2006).

An average thickness of the positive electrode substrate is preferably 3 µm or more and 50 µm or less, more preferably 5 µm or more and 40 µm or less, still more preferably 8 µm or more and 30 µm or less, and particularly preferably 10 µm or more and 25 µm or less. By setting the average thickness of the positive electrode substrate within the above range, an energy density of the non-aqueous electrolyte energy storage device can be increased while strength of the positive electrode substrate is enhanced.

The intermediate layer is a layer arranged between the positive electrode substrate and the positive electrode active material layer. Since the intermediate layer includes a conductive agent such as carbon particles, contact resistance between the positive electrode substrate and the positive electrode active material layer is reduced. A configuration of the intermediate layer is not particularly limited, and includes, for example, a binder and a conductive agent.

The positive electrode active material layer includes positive electrode active material particles. The positive electrode active material layer includes, as necessary, optional constituents such as a conductive agent, a binder, a thickener, and a filler.

The positive electrode active material particles include a compound having an olivine-type crystal structure. The compound having an olivine-type crystal structure has a crystal structure attributable to space group Pnma. A crystal structure attributable to space group Pnma refers to having a peak attributable to space group Pnma in an X-ray diffraction pattern.

The compound having an olivine-type crystal structure may be a compound including a lithium element and a transition metal element. Examples of the compound having an olivine-type crystal structure include a compound including an oxoacid anion (PO₄³⁻, SO₄²⁻, SiO₄⁴⁻, BO₃³⁻, VO₄³⁻, or the like), a lithium ion, and a transition metal ion. The compound having an olivine-type crystal structure may further include another element (for example, a halogen element or the like). A transition metal element contained in the compound having an olivine-type crystal structure is preferably an iron element, a manganese element, a nickel element, or a cobalt element, and more preferably an iron element. An oxoacid anion contained in the compound having an olivine-type crystal structure is preferably a phosphate anion (PO₄³⁻).

The compound having an olivine-type crystal structure is preferably a compound represented by the following formula (1).

LiₐM_{b}(AO_{c})_{d}Xₑ ... (1)

In formula (1), M is at least one transition metal element. A is at least one selected from B, Al, Si, P, S, Cl, Ti, V, Cr, Mo, or W. X is at least one halogen element. a, b, c, d, and e are numbers satisfying 0 < a ≤ 3, 0 < b ≤ 2, 2 ≤ c ≤ 4, 1 ≤ d ≤ 3, and 0 ≤ e ≤ 1. Each of a, b, c, d, and e may be an integer or a decimal number.

In formula (1), M is preferably any one of Fe, Mn, Ni and Co, or a combination of any two thereof. M is more preferably Fe, Mn or a combination thereof, and still more preferably Fe. Moreover, the content ratio of Fe in M is preferably 50 mol% or more, and more preferably 70 mol% or more, 90 mol% or more, or 99 mol% or more. A is preferably P. X is preferably F. In one embodiment, a = 1, b = 1, c = 4, d = 1, and e = 0 may be preferable.

Specific examples of the compound having an olivine-type crystal structure include LiFePO₄, LiCoPO₄, LiFeₓCo₁₋ₓPO₄ (0 < x < 1), LiMnPO₄, LiNiPO₄, LiFeₓMn₁₋ₓPO₄ (0 < x < 1), LiCrPO₄, LiFeVO₄, Li₂FeSiO₄, Li₂Fe₂(SO₄)_{3,} LiFeBO₃, LiFePO_{3.9}F_{0.2}, Li₂MnSiO₄, Li₂CoPO₄F, and the like. An atom or a polyanion in the compound having an olivine-type crystal structure may be partially substituted with another atom or an anion species. As the compound having an olivine-type crystal structure, lithium iron phosphate (LiFePO₄) is preferable. The lithium iron phosphate may be one in which a part of atoms or polyanions constituting the lithium iron phosphate is substituted with another atom or anion species. As the compound having an olivine-type crystal structure, one kind may be used alone, or two or more kinds may be mixed and used.

The content of the compound having an olivine-type crystal structure in the positive electrode active material particles is, for example, preferably 80% by mass or more and 99.9% by mass or less, and more preferably 90% by mass or more and 99% by mass or less.

The positive electrode active material particles including a compound having an olivine-type crystal structure are usually secondary particles formed by aggregation of primary particles of the compound having an olivine-type crystal structure. The positive electrode active material particles may be particles in which a plurality of primary particles exist independently without aggregating with each other (single particles), or may be a mixture of the single particles and secondary particles. The "primary particles" refer to particles in which no grain boundary is observed in appearance in observation with a scanning electron microscope (SEM). The "secondary particles" refer to particles formed by aggregation of a plurality of primary particles.

The positive electrode active material particles preferably include a carbon material present on at least part of surfaces thereof. A part of the carbon material may be present inside the secondary particles (between primary particles) of the compound having an olivine-type crystal structure. In the positive electrode active material particles, there may be a portion not coated with the carbon material (typically, a portion where the compound having a polyanion structure is exposed). Since the carbon material is present on at least part of surfaces of the positive electrode active material particles including the compound having a polyanion structure, the positive electrode active material particles can exhibit sufficient electronic conductivity between the particles.

The carbon material refers to a material whose main constituent element is a carbon element. The main constituent element refers to an element having the largest content on a mass basis. For example, the content ratio of the carbon element in the carbon material may be 80% by mass or more, 90% by mass or more, 95% by mass, 99% by mass, or 99.9% by mass or more. The carbon material is preferably a carbon material other than an uncarbonized polymer compound. Examples of elements other than the carbon element that may be contained in the carbon material include an oxygen element, a hydrogen element, a nitrogen element, and the like. Examples of the carbon material include graphite, non-graphitic carbon, and the like.

The content of the carbon material in the positive electrode active material particles is preferably 0.1% by mass or more and 20% by mass or less, more preferably 0.2% by mass or more and 10% by mass or less, and still more preferably 0.3% by mass or more and 5% by mass or less. When the content of the carbon material in the positive electrode active material particles is the above lower limit or more, enhancement of electronic conductivity or the like can be achieved. When the content of the carbon material in the positive electrode active material particles is the above upper limit or less, the content of the compound having a polyanion structure can be increased, and for example, the volumetric discharge capacity of the positive electrode active material layer can be increased.

The total content of the compound having a polyanion structure and the carbon material in the positive electrode active material particles is preferably 90% by mass or more and 100% by mass or less, and may be 95% by mass or more, 98% by mass or more, 99% by mass or more, or 99.9% by mass or more.

An upper limit of the D50 particle size of the positive electrode active material particles is 3 µm, preferably 2.5 µm, more preferably 2.0 µm, and still more preferably 1.5 µm. By setting the D50 particle size of the positive electrode active material particles to the above upper limit or less, the resistance can be reduced. A lower limit of the D50 particle size is preferably 0.1 µm, more preferably 0.3 µm, and still more preferably 0.7 µm. By setting the D50 particle size of the positive electrode active material particles to the above lower limit or more, manufacturing or handling of the positive electrode active material particles becomes easy. The D50 particle size of the positive electrode active material particles may be within a range in which any of the above lower limits and any of the above upper limits are combined.

An upper limit of the D90 particle size of the positive electrode active material particles is preferably 8 µm, more preferably 6 µm, and still more preferably 4 µm. By setting the D90 particle size of the positive electrode active material particles to the above upper limit or less, the resistance can be further reduced. A lower limit of the D90 particle size is preferably 0.5 µm, more preferably 1 µm, and still more preferably 2 µm. By setting the D90 particle size of the positive electrode active material particles to the above lower limit or more, manufacturing or handling of the positive electrode active material particles becomes easy. The D90 particle size of the positive electrode active material particles may be within a range in which any of the above lower limits and any of the above upper limits are combined.

An upper limit of the D10 particle size of the positive electrode active material particles is preferably 2 µm, more preferably 1.5 µm, and still more preferably 1.0 µm. By setting the D10 particle size of the positive electrode active material particles to the above upper limit or less, the resistance can be reduced. A lower limit of the D10 particle size is preferably 0.05 µm, more preferably 0.1 µm, and still more preferably 0.2 µm. By setting the D10 particle size of the positive electrode active material particles to the above lower limit or more, manufacturing or handling of the positive electrode active material particles becomes easy. The D10 particle size of the positive electrode active material particles may be within a range in which any of the above lower limits and any of the above upper limits are combined.

In order to obtain the positive electrode active material particles having a predetermined particle size (D50 particle size or the like), a pulverizer (crusher), a classifier, or the like is used. In particular, as described in detail below, the positive electrode active material particles having a D50 particle size of 3 µm or less can be effectively obtained by pulverizing secondary particles of a positive electrode active material including a compound having an olivine-type crystal structure. That is, the positive electrode active material particles are preferably a pulverized product.

An upper limit of the BET specific surface area of the positive electrode active material particles is 10 m²/g, preferably 9 m²/g, and more preferably 8 m²/g. By setting the BET specific surface area of the positive electrode active material particles to the above upper limit or less and the D50 particle size of the positive electrode active material particles to the above upper limit or less, each positive electrode active material particle is in a state of being formed of a relatively small number of primary particles, and the ion transport resistance is reduced. A lower limit of the BET specific surface area is preferably 3 m²/g, more preferably 5 m²/g, and still more preferably 7 m²/g. By setting the BET specific surface area of the positive electrode active material particles to the above lower limit or more, a contact area between the positive electrode active material particles and the non-aqueous electrolyte increases, and output performance and the like tend to increase. The BET specific surface area of the positive electrode active material particles may be within a range in which any of the above lower limits and any of the above upper limits are combined.

The positive electrode active material particles including a compound having an olivine-type crystal structure can be manufactured, for example, by the following method. A compound including a transition metal element constituting the compound having an olivine-type crystal structure (precursor) and a lithium salt of a phosphoric acid, such as LiH₂PO₄, are mixed and heated to obtain a compound having an olivine-type crystal structure. Examples of the precursor include a hydroxide of a transition metal element (hydroxide precursor), a sulfate compound of a transition metal element, a phosphate compound of a transition metal element, and the like. The hydroxide precursor can be obtained, for example, by a precipitation reaction between a transition metal ion and a hydroxide ion in water.

The obtained compound having an olivine-type crystal structure and a carbon source are mixed in water to form a slurry. The slurry is pulverized by a bead mill or the like, and dried. The primary particle diameter of the obtained positive electrode active material particles can be adjusted depending on conditions of this pulverization. For example, by reducing a bead size used in the bead mill or lengthening a treatment time, the primary particle diameter of the positive electrode active material particles tends to become smaller. A mixture of the dried compound having an olivine-type crystal structure and the carbon source is fired in a reducing atmosphere or an inert atmosphere, thereby obtaining particles in which secondary particles of the positive electrode active material including the compound having an olivine-type crystal structure are coated with a carbon material. Alternatively, the precursor, a lithium salt of phosphoric acid, such as LiH₂PO₄, and a carbon source are mixed and fired in a reducing atmosphere or an inert atmosphere, whereby particles in which secondary particles of a positive electrode active material including a compound having an olivine-type crystal structure are coated with a carbon material can also be obtained. As the carbon source, an organic substance such as sucrose, lactose, maltose, sucrose, polyvinyl alcohol, or ascorbic acid can be used. A firing temperature is preferably in a range from 500 °C to 1000 °C. By setting the firing temperature to 500 °C or higher, carbonization of the carbon source becomes particularly sufficient, and positive electrode active material particles having sufficient electronic conductivity can be obtained. By setting the firing temperature to 1000 °C or lower, sublimation of lithium and the like in the compound having an olivine-type crystal structure is suppressed, a deviation of an element composition ratio is suppressed, and particle growth is also suppressed, whereby charge-discharge performance can be improved. When a positive electrode active material including no carbon material is manufactured, mixing with the carbon source can be omitted.

By pulverizing the obtained particles with a jet mill or the like, positive electrode active material particles including a compound having an olivine-type crystal structure can be obtained. The D50 particle size and the like of the obtained positive electrode active material particles can be adjusted according to the degree of pulverization at this time. In addition, the BET specific surface area of the obtained positive electrode active material particles can be adjusted by adjusting a firing temperature, a firing time, and the like. For example, by increasing the firing temperature or lengthening the firing time, the primary particle diameter of the obtained positive electrode active material particles tends to become larger, and the BET specific surface area tends to become smaller. Adjustment of the BET specific surface area of the obtained positive electrode active material particles or the like can also be achieved by adjusting manufacturing conditions of the precursor (for example, pH during a precipitation reaction) and the like.

The content of the positive electrode active material particles in the positive electrode active material layer is preferably 50% by mass or more and 99% by mass or less, more preferably 70% by mass or more and 98% by mass or less, and still more preferably 80% by mass or more and 95% by mass or less. By setting the content of the positive electrode active material particles within the above range, it is possible to achieve both high energy density and manufacturability of the positive electrode active material layer.

The conductive agent is not particularly limited as long as it is a material having conductivity. Examples of such a conductive agent include carbon materials, metals, conductive ceramics, and the like. Examples of the carbon materials include graphite, non-graphitic carbon, graphene-based carbon, and the like. Examples of the non-graphitic carbon include carbon nanofibers, pitch-based carbon fibers, carbon black, and the like. Examples of the carbon black include furnace black, acetylene black, Ketjen black, and the like. Examples of the graphene-based carbon include graphene, carbon nanotubes, fullerene, and the like. Examples of the shape of the conductive agent include a powdery form, a fibrous form, and the like. As the conductive agent, one of these materials may be used alone, or two or more kinds thereof may be used in mixture. Moreover, these materials may be composited and used. For example, a composite material of carbon black and a carbon nanotube may be used. Among these, carbon black is preferable from the viewpoints of electronic conductivity and coatability and acetylene black is particularly preferable.

The content of the conductive agent in the positive electrode active material layer is preferably 1% by mass or more and 10% by mass or less, and more preferably 3% by mass or more and 9% by mass or less. By setting the content of the conductive agent within the above range, the energy density of the non-aqueous electrolyte energy storage device can be increased. A carbon material included in the positive electrode active material particles is not regarded as this conductive agent.

Examples of the binder include thermoplastic resins such as fluororesins (polytetrafluoroethylene (PTFE), polyvinylidene fluoride (PVDF), and the like), polyethylene, polypropylene, polyacrylate, and polyimide; elastomers such as ethylene-propylene-diene rubber (EPDM), sulfonated EPDM, styrene-butadiene rubber (SBR), and fluororubber; polysaccharide polymers; and the like.

The content of the binder in the positive electrode active material layer is preferably 1% by mass or more and 10% by mass or less, and more preferably 2% by mass or more and 9% by mass or less. By setting the content of the binder within the above range, the positive electrode active material particles can be stably held.

Examples of the thickener include polysaccharide polymers such as carboxymethyl cellulose (CMC) and methyl cellulose. When the thickener has a functional group that reacts with lithium or the like, the functional group may be deactivated in advance by methylation or the like. In an embodiment of the present invention, a thickener may not be contained in the positive electrode active material layer.

The filler is not particularly limited. Examples of the filler include polyolefins such as polypropylene and polyethylene; inorganic oxides such as silicon dioxide, alumina, titanium dioxide, calcium oxide, strontium oxide, barium oxide, magnesium oxide, and aluminosilicate; hydroxides such as magnesium hydroxide, calcium hydroxide, and aluminum hydroxide; carbonates such as calcium carbonate; sparingly soluble ionic crystals such as calcium fluoride, barium fluoride, and barium sulfate; nitrides such as aluminum nitride and silicon nitride; substances derived from mineral resources, such as talc, montmorillonite, boehmite, zeolite, apatite, kaolin, mullite, spinel, olivine, sericite, bentonite, and mica, or synthetic products thereof; and the like. In an embodiment of the present invention, a filler may not be contained in the positive electrode active material layer.

The positive electrode active material layer may further contain, in addition to the positive electrode active material particles, the conductive agent, the binder, the thickener, and the filler, typical non-metal elements such as B, N, P, F, Cl, Br, and I; typical metal elements such as Li, Na, Mg, Al, K, Ca, Zn, Ga, Ge, Sn, Sr, and Ba; and transition metal elements such as Sc, Ti, V, Cr, Mn, Fe, Co, Ni, Cu, Mo, Zr, Nb, and W.[0068]

### (Negative Electrode)

The negative electrode has a negative electrode substrate and a negative electrode active material layer disposed on the negative electrode substrate directly or via an intermediate layer. The configuration of the intermediate layer is not particularly limited, and can be selected, for example, from the configurations exemplified for the positive electrode described above.

The negative electrode substrate has conductivity. As the material of the negative electrode substrate, a metal such as copper, nickel, stainless steel, nickel-plated steel, or aluminum, an alloy thereof, a carbonaceous material, or the like is used. Among these, copper or a copper alloy is preferable. Examples of the negative electrode substrate include a foil, a vapor-deposited film, a mesh, a porous material, and the like, and a foil is preferable from the viewpoint of cost. Therefore, a copper foil or a copper alloy foil is preferable as the negative electrode substrate. Examples of the copper foil include rolled copper foil, electrolytic copper foil, and the like.

The average thickness of the negative electrode substrate is preferably 2 µm or more and 35 µm or less, more preferably 3 µm or more and 30 µm or less, still more preferably 4 µm or more and 25 µm or less, and particularly preferably 5 µm or more and 20 µm or less. By setting the average thickness of the negative electrode substrate within the above range, an energy density of the non-aqueous electrolyte energy storage device can be increased while strength of the negative electrode substrate is enhanced.

The negative electrode active material layer includes a negative electrode active material. The negative electrode active material layer includes, as necessary, optional constituents such as a conductive agent, a binder, a thickener, and a filler. The optional constituents such as a conductive agent, a binder, a thickener, and a filler can be selected from the materials exemplified for the positive electrode described above.

The negative electrode active material layer may further contain, in addition to the negative electrode active material, the conductive agent, the binder, the thickener, and the filler, typical non-metal elements such as B, N, P, F, Cl, Br, and I; typical metal elements such as Li, Na, Mg, Al, K, Ca, Zn, Ga, Ge, Sn, Sr, and Ba; and transition metal elements such as Sc, Ti, V, Cr, Mn, Fe, Co, Ni, Cu, Mo, Zr, Ta, Hf, Nb, and W.[0073] The negative electrode active material can be appropriately selected from known negative electrode active materials. As the negative electrode active material for a lithium-ion secondary battery, a material capable of occluding and releasing lithium ions is usually used. Examples of the negative electrode active material include metallic lithium; metals or semimetals such as Si and Sn; metal oxides or semimetal oxides such as Si oxides, Ti oxides, and Sn oxides; titanium-containing oxides such as Li₄Ti₅O₁₂, LiTiO₂, and TiNb₂O₇; polyphosphate compounds; silicon carbide; carbon materials such as graphite and non-graphitic carbon (graphitizable carbon or non-graphitizable carbon); and the like. Among these materials, a carbon material is preferable, graphite or non-graphitic carbon is more preferable, and graphite is still more preferable. In the negative electrode active material layer, one of these materials may be used alone, or two or more kinds thereof may be used in mixture.

The term "graphite" refers to a carbon material in which the average interplanar spacing (d₀₀₂) of the (002) plane determined by an X-ray diffraction method before charging and discharging or in a discharged state is 0.33 nm or more and less than 0.34 nm. Examples of the graphite include natural graphite and artificial graphite. Artificial graphite is preferable from the viewpoint that a material having stable physical properties can be obtained.

The term "non-graphitic carbon" refers to a carbon material in which the average interplanar spacing (d₀₀₂) of the (002) plane determined by an X-ray diffraction method before charge and discharge or in a discharged state is 0.34 nm or more and 0.42 nm or less. Examples of the non-graphitic carbon include non-graphitizable carbon and graphitizable carbon. Examples of the non-graphitic carbon include resin-derived materials, petroleum pitch or petroleum pitch-derived materials, petroleum coke or petroleum coke-derived materials, plant-derived materials, alcohol-derived materials, and the like.

Here, the term "discharged state" of the carbon material means a state in which discharge is performed such that lithium ions, which can be occluded and released during charge and discharge, are sufficiently released from the carbon material serving as a negative electrode active material. For example, in a half-cell in which a negative electrode including a carbon material as a negative electrode active material is used as a working electrode and metallic lithium is used as a counter electrode, the "discharged state" refers to a state in which an open-circuit voltage is 0.7 V or higher.

The term "non-graphitizable carbon" refers to a carbon material in which the d₀₀₂ is 0.36 nm or more and 0.42 nm or less.

The term "graphitizable carbon" refers to a carbon material in which the d₀₀₂ is 0.34 nm or more and less than 0.36 nm.

The negative electrode active material is usually in the form of particles (powder). The average particle size of the negative electrode active material can be, for example, 1 nm or more and 100 µm or less. When the negative electrode active material is a carbon material, a titanium-containing oxide, or a polyphosphate compound, the average particle size thereof may be 1 µm or more and 100 µm or less. When the negative electrode active material is Si, Sn, an Si oxide, an Sn oxide, or the like, the average particle size thereof may be 1 nm or more and 1 µm or less. By setting the average particle size of the negative electrode active material to the above lower limit or more, manufacturing or handling of the negative electrode active material becomes easy. By setting the average particle size of the negative electrode active material to be not less than the above lower limit, the electronic conductivity of the negative electrode active material layer is improved. In order to obtain powder having a predetermined particle size, a pulverizer, a classifier, or the like is used. A pulverization method and a classification method can be selected, for example, from the methods exemplified for the positive electrode. When the negative electrode active material is a metal such as metallic lithium, the negative electrode active material layer may be in the form of a foil.

The content of the negative electrode active material in the negative electrode active material layer is preferably 60% by mass or more and 99% by mass or less, and more preferably 90% by mass or more and 98% by mass or less. By setting the content of the negative electrode active material within the above range, both high energy density and manufacturability of the negative electrode active material layer can be achieved.

When the negative electrode active material layer contains the conductive agent, the content of the conductive agent in the negative electrode active material layer is preferably 1% by mass or more and 10% by mass or less, more preferably 3% by mass or more and 9% by mass or less. The content of the conductive agent in the negative electrode active material layer may be 5% by mass or less, or may be 2% by mass or less. In an embodiment of the present invention, a conductive agent may not be contained in the negative electrode active material layer.

When the negative electrode active material layer contains the binder, the content of the binder in the negative electrode active material layer is preferably 1% by mass or more and 10% by mass or less, and more preferably 2% by mass or more and 8% by mass or less.

When the negative electrode active material layer contains the thickener, the content of the thickener in the negative electrode active material layer is preferably 0.1% by mass or more and 10% by mass or less, more preferably 0.5% by mass or more and 8% by mass or less. The content of the thickener in the negative electrode active material layer may be 5% by mass or less, or may be 2% by mass or less.

When the negative electrode active material layer contains the filler, the content of the filler in the negative electrode active material layer can be 0.1% by mass or more and 8% by mass or less and is usually preferably 5% by mass or less, and more preferably 2% by mass or less. In an embodiment of the present invention, a filler may not be contained in the negative electrode active material layer.

### (Separator)

A separator can be appropriately selected from known separators. As the separator, for example, a separator formed only of a base material layer, a separator in which a heat-resistant layer including heat-resistant particles and a binder is formed on one surface or both surfaces of the base material layer, or the like can be used. Examples of the shape of the base material layer of the separator include a woven fabric, a nonwoven fabric, a porous resin film, and the like. Among these shapes, a porous resin film is preferable from the standpoint of strength, and a nonwoven fabric is preferable from the standpoint of liquid retainability of the non-aqueous electrolyte. As the material of the base material layer of the separator, for example, polyolefins such as polyethylene and polypropylene are preferable from the standpoint of a shutdown function, and polyimide, aramid, and the like are preferable from the standpoint of oxidative decomposition resistance. As the base material layer of the separator, a material obtained by combining these resins may be used.

The heat-resistant particles included in the heat-resistant layer preferably have a mass loss of 5% or less when the temperature is raised from room temperature to 500 °C in an air atmosphere of 1 atmosphere, and more preferably have a mass loss of 5% or less when the temperature is raised from room temperature to 800 °C. Examples of materials having a mass loss of a predetermined value or less include inorganic compounds. Examples of the inorganic compounds include: oxides such as iron oxide, silicon oxide, aluminum oxide, titanium oxide, zirconium oxide, calcium oxide, strontium oxide, barium oxide, magnesium oxide, and aluminosilicate; nitrides such as aluminum nitride and silicon nitride; carbonates such as calcium carbonate; sulfates such as barium sulfate; sparingly soluble ionic crystals such as calcium fluoride, barium fluoride, and barium titanate; covalent crystals such as silicon and diamond; substances derived from mineral resources, such as talc, montmorillonite, boehmite, zeolite, apatite, kaolin, mullite, spinel, olivine, sericite, bentonite, and mica, or synthetic products thereof; and the like. As the inorganic compound, a single substance or a composite of these substances may be used alone, or two or more kinds of these substances may be used in combination. Among these inorganic compounds, silicon oxide, aluminum oxide, or aluminosilicate is preferable from the viewpoint of safety of the non-aqueous electrolyte energy storage device.

A porosity of the separator is preferably 80% by volume or less from the standpoint of strength, and is preferably 20% by volume or more from the standpoint of discharge performance. Here, the "porosity" is a value on a volume basis, and means a value measured by a mercury porosimeter.

As the separator, a polymer gel composed of a polymer and a non-aqueous electrolyte may be used. Examples of the polymer include polyacrylonitrile, polyethylene oxide, polypropylene oxide, polymethyl methacrylate, polyvinyl acetate, polyvinylpyrrolidone, polyvinylidene fluoride, and the like. The use of the polymer gel has an effect of suppressing liquid leakage. As the separator, a porous resin film, a nonwoven fabric, or the like as described above may be used in combination with the polymer gel.

### (Non-aqueous Electrolyte)

The non-aqueous electrolyte contains a salt having an oxalato complex anion (hereinafter also referred to as "salt X"). The non-aqueous electrolyte usually further contains another salt other than the salt X as an electrolyte salt. The salt X may function as an electrolyte salt. A non-aqueous electrolyte solution may be used as the non-aqueous electrolyte. The non-aqueous electrolyte solution includes a non-aqueous solvent, and the salt X and an electrolyte salt are dissolved in this non-aqueous solvent.

The salt X is composed of an oxalato complex anion and a counter cation. The oxalato complex anion is an anion of a complex formed by coordination of at least one oxalate ion (C₂O₄²⁻) to a central element. Examples of the central element include non-metal elements, such as a boron element, a phosphorus element, a silicon element, and the like, and a phosphorus element is preferable. Examples of the counter cation include alkali metal ions such as a lithium ion, a sodium ion, and a potassium ion, and a lithium ion is preferable. That is, the salt X is preferably a lithium salt. As the salt X, one kind may be used alone, or two or more kinds may be used in mixture.

Examples of the salt X include a salt having a four-coordinate oxalato complex anion in which at least one oxalate ion (C₂O₄²⁻) is coordinated to a boron (B) element as a central element, for example, lithium bis(oxalato)borate (Li[B(C₂O₄)₂]; LiBOB), lithium difluorooxalatoborate (Li[BF₂(C₂O₄)]; LiFOB), lithium bis(trifluoroethoxy)oxalatoborate (Li[B(CF₃CH₂O)₂(C₂O₄)]), and the like; and a salt having a six-coordinate oxalato complex anion in which at least one oxalate ion (C₂O₄²⁻) is coordinated to a phosphorus (P) element as a central element, for example, lithium tris(oxalato)phosphate (Li[P(C₂O₄)₃]), lithium difluorobis(oxalato)phosphate (Li[PF₂(C₂O₄)₂]; LiFOP), lithium tetrafluorooxalatophosphate (Li[PF₄(C₂O₄)]), and the like. Among these, from viewpoints such as formation of a more favorable film, a salt having a six-coordinate oxalato complex anion in which at least one oxalate ion (C₂O₄²⁻) is coordinated to a phosphorus (P) element as a central element is preferable, and LiFOP is more preferable.

The content of the salt X in the non-aqueous electrolyte is preferably 0.01% by mass or more and 5% by mass or less, more preferably 0.05% by mass or more and 3% by mass or less, still more preferably 0.1% by mass or more and 2% by mass or less, and even more preferably 0.2% by mass or more and 1% by mass or less. By setting the content of the salt X within the above range, the resistance of the non-aqueous electrolyte energy storage device can be further reduced.

The electrolyte salt (another salt other than the salt X) can be appropriately selected from known electrolyte salts. Examples of the electrolyte salt include a lithium salt, a sodium salt, a potassium salt, a magnesium salt, an onium salt, and the like. Among these, a lithium salt is preferable.

Examples of the lithium salt include: inorganic lithium salts such as LiPF₆, LiPO₂F₂, LiBF₄, LiClO₄, and LiN(SO₂F)₂; lithium salts having a halogenated hydrocarbon group such as LiSO₃CF₃, LiN(SO₂CF₃)₂, LiN(SO₂C₂F₅)₂, LiN(SO₂CF₃)(SO₂C₄F₉), LiC(SO₂CF₃)₃, and LiC(SO₂C₂F₅)₃; and the like. Among these, an inorganic lithium salt is preferable, and LiPF₆ is more preferable.

The content of the electrolyte salt in the non-aqueous electrolyte or the non-aqueous electrolyte solution at 20 °C and 1 atm is preferably 0.1 mol/dm³ or more and 2.5 mol/dm³ or less, more preferably 0.3 mol/dm³ or more and 2.0 mol/dm³ or less, still more preferably 0.5 mol/dm³ or more and 1.7 mol/dm³ or less, and particularly preferably 0.7 mol/dm³ or more and 1.5 mol/dm³ or less. By setting the content of the electrolyte salt within the above range, the ionic conductivity of the non-aqueous electrolyte or the non-aqueous electrolyte solution can be increased. In addition, the content of the electrolyte salt in the non-aqueous electrolyte or the non-aqueous electrolyte solution is defined as a total of the content of the salt X and the content of the other salts other than the salt X.

The non-aqueous solvent can be appropriately selected from known non-aqueous solvents. Examples of the non-aqueous solvent include cyclic carbonates, linear carbonates, carboxylic acid esters, phosphoric acid esters, sulfonic acid esters, ethers, amides, nitriles, and the like. As the non-aqueous solvent, compounds obtained by substituting a part of hydrogen atoms included in these compounds with halogen may be used.

Examples of the cyclic carbonates include ethylene carbonate (EC), propylene carbonate (PC), butylene carbonate (BC), chloroethylene carbonate, fluoroethylene carbonate (FEC), difluoroethylene carbonate (DFEC), and the like. The cyclic carbonate is preferably a saturated cyclic carbonate, and more preferably EC.

Examples of the linear carbonates include diethyl carbonate (DEC), dimethyl carbonate (DMC), ethyl methyl carbonate (EMC), diphenyl carbonate, trifluoroethyl methyl carbonate, bis(trifluoroethyl) carbonate, and the like. Among these, EMC is preferable.

As the non-aqueous solvent, it is preferable to use at least one of a cyclic carbonate or a linear carbonate, and it is more preferable to use a cyclic carbonate and a linear carbonate in combination. By using a cyclic carbonate, dissociation of the electrolyte salt can be promoted, and the ionic conductivity of the non-aqueous electrolyte solution can be improved. By using a linear carbonate, the viscosity of the non-aqueous electrolyte solution can be suppressed to be low. When a cyclic carbonate and a linear carbonate are used in combination, the volume ratio of the cyclic carbonate to the linear carbonate (cyclic carbonate:linear carbonate) is preferably, for example, in a range of 5:95 to 50:50.

The non-aqueous electrolyte or the non-aqueous electrolyte solution may include an additive other than the salt X, the electrolyte salt, and the non-aqueous solvent. Examples of the additive include halogenated carbonic acid esters such as fluoroethylene carbonate (FEC) and difluoroethylene carbonate (DFEC); unsaturated cyclic carbonates such as vinylene carbonate, methylvinylene carbonate, ethylvinylene carbonate, 1-phenylvinylene carbonate, 1,2-diphenylvinylene carbonate, and vinylethylene carbonate; imide salts such as lithium bis(fluorosulfonyl)imide and lithium difluorophosphonylfluorosulfonylimide; aromatic compounds such as biphenyl, alkylbiphenyl, terphenyl, partially hydrogenated products of terphenyl, cyclohexylbenzene, t-butylbenzene, t-amylbenzene, diphenyl ether, and dibenzofuran; partially halogenated products of the aromatic compounds such as 2-fluorobiphenyl, o-cyclohexylfluorobenzene, and p-cyclohexylfluorobenzene; halogenated anisole compounds such as 2,4-difluoroanisole, 2,5-difluoroanisole, 2,6-difluoroanisole, and 3,5-difluoroanisole; succinic anhydride, glutaric anhydride, maleic anhydride, citraconic anhydride, glutaconic anhydride, itaconic anhydride, and cyclohexanedicarboxylic anhydride; ethylene sulfite, propylene sulfite, dimethyl sulfite, methyl methanesulfonate, busulfan, methyl toluenesulfonate, dimethyl sulfate, ethylene sulfate, sulfolane, dimethyl sulfone, diethyl sulfone, dimethyl sulfoxide, diethyl sulfoxide, tetramethylene sulfoxide, diphenyl sulfide, 4,4'-bis(2,2-dioxo-1,3,2-dioxathiolane), 4-methylsulfonyloxymethyl-2,2-dioxo-1,3,2-dioxathiolane, thioanisole, diphenyl disulfide, dipyridinium disulfide, 1,3-propenesultone, 1,3-propanesultone, 1,4-butanesultone, 1,4-butenesultone, perfluorooctane, tris(trimethylsilyl) borate, tris(trimethylsilyl) phosphate, tetrakis(trimethylsilyl) titanate, lithium monofluorophosphate, lithium difluorophosphate, and the like. Among these, the additive preferably includes at least one selected from the group consisting of an unsaturated cyclic carbonate and an imide salt, and more preferably includes both an unsaturated cyclic carbonate and an imide salt. As the unsaturated cyclic carbonate, vinylene carbonate is preferable. As the imide salt, lithium difluorophosphonylfluorosulfonylimide is preferable. One of these additives may be used alone, or two or more kinds thereof may be used in mixture.

The content of the additive contained in the non-aqueous electrolyte or the non-aqueous electrolyte solution is preferably 0.01% by mass or more and 10% by mass or less, more preferably 0.1% by mass or more and 7% by mass or less, still more preferably 0.2% by mass or more and 5% by mass or less, and particularly preferably 0.3% by mass or more and 3% by mass or less, with respect to a total mass of the non-aqueous electrolyte or the non-aqueous electrolyte solution. By setting the content of the additive within the above range, capacity retention performance or cycle performance after high-temperature storage can be improved, and safety can be further improved.

As the non-aqueous electrolyte, a solid electrolyte may be used, or a non-aqueous electrolyte solution and a solid electrolyte may be used in combination.

The solid electrolyte can be selected from any material that has ionic conductivity for lithium, sodium, calcium, or the like and is solid at room temperature (for example, 15 °C to 25 °C). Examples of the solid electrolyte include sulfide solid electrolytes, oxide solid electrolytes, nitride solid electrolytes, polymer solid electrolytes, and the like.

Examples of the sulfide solid electrolyte include Li₂S-P₂S₅, LiI-Li₂S-P₂S₅, Li₁₀Ge-P₂S₁₂, and the like.

The shape of the non-aqueous electrolyte energy storage device of the present embodiment is not particularly limited, and examples thereof include a cylindrical battery, a prismatic battery, a flat battery, a coin battery, a button battery, and the like.

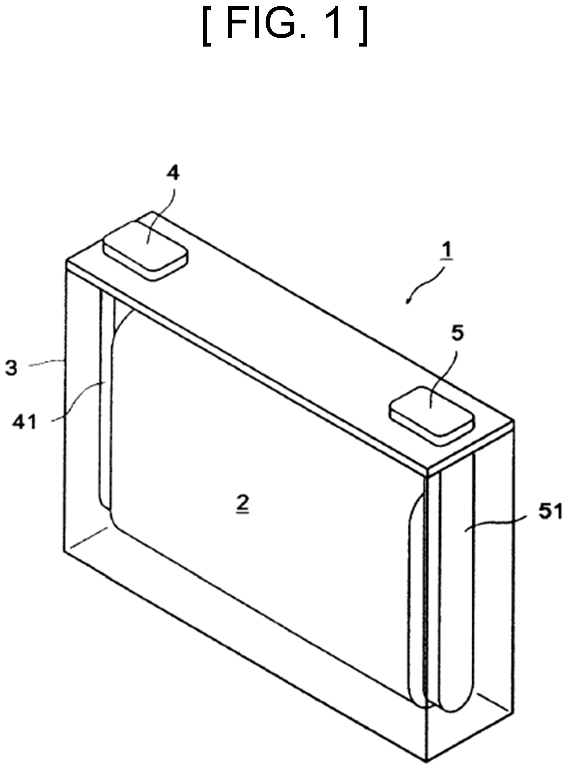

FIG. 1 illustrates a non-aqueous electrolyte energy storage device 1 as an example of the prismatic battery. FIG. 1 is a view in which the inside of a container is seen through. An electrode body 2 having a positive electrode and a negative electrode that are wound with a separator interposed therebetween is accommodated in a prismatic container 3. The positive electrode is electrically connected to a positive electrode terminal 4 via a positive electrode lead 41. The negative electrode is electrically connected to a negative electrode terminal 5 via a negative electrode lead 51.

### <Energy Storage Apparatus>

The non-aqueous electrolyte energy storage device of the present embodiment can be mounted as an energy storage unit (battery module) configured by assembling a plurality of non-aqueous electrolyte energy storage devices, on a power source for automobiles such as electric vehicles (EVs), hybrid vehicles (HEVs), and plug-in hybrid vehicles (PHEVs), a power source for electronic devices such as personal computers and communication terminals, a power source for power storage, or the like. In this case, the technology of the present invention may be applied to at least one non-aqueous electrolyte energy storage device included in the energy storage unit.

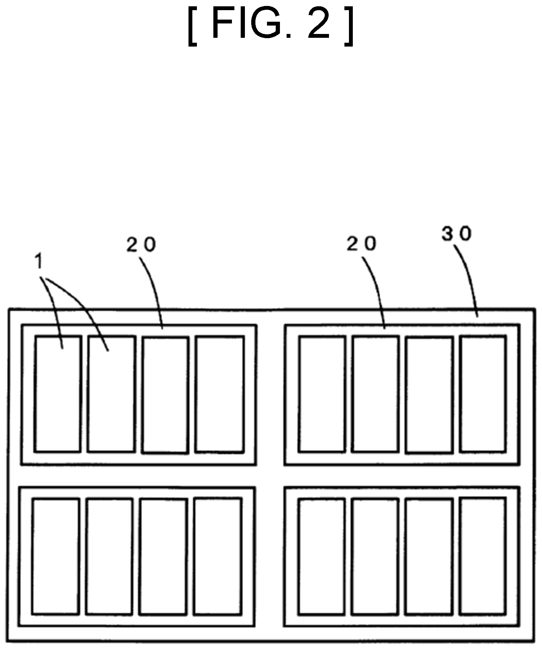

FIG. 2 illustrates an example of an energy storage apparatus 30 in which energy storage units 20, which are each configured by assembling two or more electrically connected non-aqueous electrolyte energy storage devices 1, are further assembled. The energy storage apparatus 30 may include a bus bar (not illustrated) that electrically connects two or more non-aqueous electrolyte energy storage devices 1, a bus bar (not illustrated) that electrically connects two or more energy storage units 20, and the like. The energy storage unit 20 or the energy storage apparatus 30 may include a state monitoring apparatus (not illustrated) that monitors a state of one or more non-aqueous electrolyte energy storage devices.

### <Method for Manufacturing Non-aqueous Electrolyte Energy Storage Device>

A method for manufacturing a non-aqueous electrolyte energy storage device of the present embodiment can be appropriately selected from known methods, but the following method is preferable. That is, a method for manufacturing a non-aqueous electrolyte energy storage device according to one embodiment of the present invention includes: obtaining positive electrode active material particles having a D50 particle size of 3 µm or less and a BET specific surface area of 10 m²/g or less by pulverizing secondary particles of a positive electrode active material including a compound having an olivine-type crystal structure; producing a positive electrode containing the positive electrode active material particles; and preparing a non-aqueous electrolyte containing a salt having an oxalato complex anion. The method for manufacturing a non-aqueous electrolyte energy storage device of the present embodiment may further include preparing an electrode body, housing the electrode body and the non-aqueous electrolyte in a container, and the like.

The secondary particles of the positive electrode active material including a compound having an olivine-type crystal structure, which are to be subjected to pulverization in obtaining the positive electrode active material particles, may include a carbon material present on at least part of surfaces thereof. The secondary particles of the positive electrode active material to be subjected to the pulverization can be obtained, for example, by firing a plurality of compounds serving as raw materials, as described above. Pulverization of the secondary particles of the positive electrode active material can be performed using a mortar, a ball mill, a sand mill, a vibrating ball mill, a planetary ball mill, a jet mill, a counter jet mill, a swirling airflow-type jet mill, or the like. The pulverization may be performed either by a dry method or a wet method. The secondary particles of the positive electrode active material after pulverization may be classified. As a classification method, a sieve, an air classifier, or the like can be used.

The positive electrode can be produced, for example, by applying a positive electrode mixture paste to the positive electrode substrate directly or via an intermediate layer, and drying the paste. The positive electrode mixture paste includes respective constituents constituting the positive electrode active material layer, such as the positive electrode active material particles, and a dispersion medium. After drying the applied positive electrode mixture paste, pressing or the like may be performed. Specific forms and preferred forms of the produced positive electrode are the same as specific forms and preferred forms of the positive electrode included in the non-aqueous electrolyte energy storage device according to one embodiment of the present invention.

Preparing the non-aqueous electrolyte may be performed by formulating the non-aqueous electrolyte. The formulation of the non-aqueous electrolyte can be performed, for example, by mixing respective constituents of the non-aqueous electrolyte. Specific forms and preferred forms of the prepared non-aqueous electrolyte are the same as specific forms and preferred forms of the non-aqueous electrolyte included in the non-aqueous electrolyte energy storage device according to one embodiment of the present invention.

The manufacturing method may further include preparing a negative electrode, preparing an electrode body, and housing the electrode body and the non-aqueous electrolyte in a container.

Preparing the negative electrode may be performed by producing the negative electrode. The negative electrode can be produced, for example, by applying a negative electrode mixture paste to the negative electrode substrate directly or via an intermediate layer, and drying the paste. The negative electrode mixture paste includes respective constituents constituting the negative electrode active material layer, such as the negative electrode active material, and a dispersion medium. After the applied negative electrode mixture paste has been dried, pressing or the like may be performed. Instead of application of the negative electrode mixture paste, the negative electrode active material layer can also be provided by lamination of a metal foil. Specific forms and preferred forms of the prepared negative electrode are the same as specific forms and preferred forms of the negative electrode included in the non-aqueous electrolyte energy storage device according to one embodiment of the present invention.

Preparing the electrode body may be performed by producing the electrode body. The electrode body can be produced, for example, by stacking or winding the positive electrode and the negative electrode with a separator interposed therebetween. Housing the non-aqueous electrolyte in the container can be appropriately selected from known methods. For example, when a non-aqueous electrolyte solution is used as the non-aqueous electrolyte, the non-aqueous electrolyte solution may be injected through an inlet formed in the container, and then the inlet may be sealed.

### <Other Embodiments>

The non-aqueous electrolyte energy storage device of the present invention is not limited to the above embodiment, and various modifications may be made without departing from the gist of the present invention. For example, the configuration of another embodiment may be added to the configuration of one embodiment, or a part of the configuration of one embodiment can be replaced with the configuration of another embodiment or a well-known technology. Furthermore, a part of the configuration of one embodiment can be deleted. In addition, a well-known technology can be added to the configuration of one embodiment.

In the above embodiment, the case where the non-aqueous electrolyte energy storage device is used as a chargeable/dischargeable non-aqueous electrolyte secondary battery (for example, a lithium-ion secondary battery) has been described, but the type, shape, dimensions, capacity, and the like of the non-aqueous electrolyte energy storage device are arbitrary. The present invention can also be applied to various secondary batteries.

In the above-described embodiment, the electrode body in which the positive electrode and the negative electrode are stacked with the separator interposed therebetween has been described, but the electrode body may not include a separator. For example, the positive electrode and the negative electrode may be in direct contact with each other in a state in which a layer having no conductivity is formed on the active material layer of the positive electrode or the negative electrode.

### Examples

Hereinafter, the present invention will be described more specifically with reference to Examples, but the present invention is not limited to the following Examples.

### [Example 1]

### (Production of Positive Electrode Active Material Particles)

According to the following procedure, positive electrode active material particles in which secondary particles of lithium iron phosphate were coated with a carbon material were obtained.

Lithium hydroxide monohydrate, diammonium hydrogen phosphate, and iron sulfate heptahydrate were weighed such that a molar ratio of Li:Fe:P was 3:1:1, and a solution in which they were mixed in ion-exchanged water was prepared. Next, this solution was transferred to a container made of polytetrafluoroethylene, and this was placed in a pressure-resistant hydrothermal reaction container. The inside of the hydrothermal reaction container was sufficiently replaced with nitrogen gas and sealed, and then heated at 170 °C for 15 hours to perform hydrothermal synthesis. After completion of the hydrothermal synthesis reaction, a product obtained by naturally cooling to room temperature was sufficiently washed with ion-exchanged water, and then dried under reduced pressure at 120 °C for 6 hours to obtain lithium iron phosphate (LFP).

The obtained LFP and sucrose powder as a carbon source were mixed in water to obtain a slurry. The obtained slurry was pulverized with a bead mill using zirconia beads and dried by spray drying. A mixture of the dried LFP and a scroll powder was fired at 650 °C in a nitrogen atmosphere, thereby obtaining particles in which secondary particles of a positive electrode active material including LFP were coated with a carbon material. The obtained particles were pulverized with a jet mill to obtain positive electrode active material particles which were a pulverized product. Bead mill conditions (bead size and treatment time), firing conditions (firing temperature and firing time), and pulverization conditions (pulverization time) were adjusted so that predetermined physical property values were obtained.

A BET specific surface area, a D10 particle size, a D50 particle size, and a D90 particle size of the obtained positive electrode active material particles were measured. The results are shown in Table 1.

### (Production of Positive Electrode)

A positive electrode mixture paste was prepared by using the obtained positive electrode active material particles, acetylene black (AB) as a conductive agent, polyvinylidene fluoride (PVDF) as a binder, and N-methylpyrrolidone (NMP) as a dispersion medium. A mass ratio of the positive electrode active material particles, the AB, and the PVDF was 90:5:5 in terms of solid content. This positive electrode mixture paste was applied to an aluminum foil serving as a positive electrode substrate, dried, and roll-pressed to form a positive electrode active material layer, thereby obtaining a positive electrode.

### (Production of Negative Electrode)

A negative electrode mixture paste was prepared by mixing graphite as a negative electrode active material, styrene-butadiene rubber (SBR) as a binder, carboxymethyl cellulose (CMC) as a thickener, and water as a dispersion medium. A mass ratio of the graphite, the SBR, and the CMC was 98.0:1.0:1.0 in terms of solid content. The negative electrode mixture paste was applied to a copper foil serving as a negative electrode substrate, dried, and roll-pressed to form a negative electrode active material layer, thereby obtaining a negative electrode.

### (Formulation of Non-aqueous Electrolyte)

LiPF₆ was dissolved at a concentration of 1.0 mol/dm³ in a solvent obtained by mixing ethylene carbonate, diethyl carbonate, and ethyl methyl carbonate at a volume ratio of 30:35:35, thereby obtaining a solution. Vinylene carbonate in an amount of 0.7% by mass, lithium difluorophosphonylfluorosulfonylimide at in an amount of 2.5% by mass, and lithium difluorobis(oxalato)phosphate (LiFOP) at in an amount of 0.5% by mass were dissolved in this solution, thereby obtaining a non-aqueous electrolyte.

### (Separator)

A polyethylene microporous film was used as a separator.

### (Assembly of Non-aqueous Electrolyte Energy Storage Device)

The positive electrode, the negative electrode, and the separator described above were stacked to produce an electrode body. The obtained electrode body was housed in a container, and then the non-aqueous electrolyte described above was injected into the container, followed by sealing of the container, thereby obtaining a non-aqueous electrolyte energy storage device of Example 1.

### [Comparative Examples 1 to 7]

Each non-aqueous electrolyte energy storage device of Comparative Examples 1 to 7 was obtained in the same manner as in Example 1, except that: positive electrode active material particles were used as the positive electrode active material particles, in which secondary particles of a positive electrode active material including LFP were coated with a carbon material, the secondary particles having a BET specific surface area and particle sizes (D10 particle size, D50 particle size, and D90 particle size) described in Table 1; and the content of lithium difluorobis(oxalato)phosphate (LiFOP) in the non-aqueous electrolyte was as described in Table 1.

The positive electrode active material particles of Comparative Examples 4 and 6 were made different from the positive electrode active material particles of Example 1 in BET specific surface area and particle size by, in addition to changing the firing conditions described above, performing sieving instead of pulverizing, with a jet mill, the obtained particles in which secondary particles of the positive electrode active material including LFP were coated with the carbon material.

The positive electrode active material particles of Comparative Examples 1 and 3 were obtained by the following procedure. Iron phosphate hydrate and lithium hydroxide monohydrate were weighed so that a molar ratio of Li:Fe:P was 2:1:1, and a solution in which they were mixed in ion-exchanged water containing polyvinylpyrrolidone and fructose was prepared. The obtained solution was dried by spray drying to prepare a powdery precursor. The prepared precursor was fired in a nitrogen atmosphere, thereby obtaining particles in which secondary particles of a positive electrode active material including LFP were coated with a carbon material. The obtained particles were pulverized with a jet mill to obtain positive electrode active material particles which were a pulverized product. Spray drying conditions (method, solution concentration, nozzle diameter, disk shape, rotation speed, and the like), firing conditions (firing temperature and firing time), and pulverization conditions (pulverization time) were adjusted so that predetermined physical property values were obtained.

The positive electrode active material particles of Comparative Examples 5 and 7 were obtained by the following procedure. Phosphoric acid and iron powder were reacted in ion-exchanged water. The obtained solution was dried by spray drying to prepare a powdery precursor. The prepared precursor was fired in a nitrogen atmosphere to obtain Fe₇(PO₄)₆. A solution was prepared by mixing the obtained Fe₇(PO₄)₆, phosphoric acid, lithium carbonate, and fructose in ion-exchanged water. The obtained solution was dried by spray drying to prepare a powdery precursor. The prepared precursor was fired in a nitrogen atmosphere, thereby obtaining particles in which secondary particles of a positive electrode active material including LFP were coated with a carbon material. Spray drying conditions (method, solution concentration, nozzle diameter, disk shape, rotation speed, and the like) and firing conditions (firing temperature and firing time) were adjusted, and sieving was performed so that predetermined physical property values were obtained.

In addition, "-" in Table 1 indicates that LiFOP was not contained.

### [Evaluation]

### (Initial Charge and Discharge)

For each non-aqueous electrolyte energy storage device of Examples and Comparative Examples, initial charge and discharge were performed under the following conditions. In a thermostatic chamber at 25 °C, constant-current charge was performed at a charge current of 0.2 C and a charge cutoff voltage of 3.5 V, and then constant-voltage charge was performed at 3.5 V. The condition for ending the charge was a time point at which the charge current decayed to 0.01 C. Thereafter, a rest period of 10 minutes was provided. Thereafter, constant-current discharge was performed at a discharge current of 0.2 C and a discharge cutoff voltage of 2.0 V.

### (Initial Capacity Confirmation Test)

Next, for each non-aqueous electrolyte energy storage device, an initial capacity confirmation test was performed at 25 °C in the following manner. Constant-current charge was performed at a charge current of 1.0 C and a charge cutoff voltage of 3.5 V, and then constant-voltage charge was performed at 3.5 V. The condition for ending the charge was a time point at which the charge current decayed to 0.01 C. Thereafter, a rest period of 10 minutes was provided. Thereafter, constant-current discharge was performed at a discharge current of 1.0 C and a discharge cutoff voltage of 2.0 V. The discharge capacity at this time was defined as "initial discharge capacity". A fully charged state based on the initial discharge capacity was defined as state of charge (SOC) 100%.

### (Direct Current Resistance Measurement)

After performing the initial charge and discharge described above, a direct current resistance (DCR) was measured in the following procedure. At 25 °C, constant-current charge was performed at a current of 1.0 C until the SOC reached an equivalent of 50%. After storage in a thermostatic chamber at -10 °C for 4 hours, discharge was performed at a current of 0.2 C, 0.5 C, or 1.0 C for 30 seconds each. After completion of each discharge, constant-current charge was performed at a current of 1.0 C to bring the SOC to 50%. A relationship between the current in each discharge and the voltage at 10 seconds after the start of the discharge was plotted, and a direct current resistance (DCR) was determined from the slope of a straight line obtained from the three-point plot. The determined direct current resistance (DCR) is shown in Table 1.

**[Table 1]**

| | Positive electrode active material particles | | | | Non-aqueous electrolyte | Evaluation |
|---|---|---|---|---|---|---|
| | BET specific surface area | D10 | D50 | D90 | LiFOP | DCR |
| | m²/g | µm | µm | µm | mass% | mΩ |
| Example 1 | 7.4 | 0.5 | 1.1 | 3.7 | 0.5 | 291.7 |
| Comparative Example 1 | 12.6 | 0.4 | 1.2 | 4.5 | 0.5 | 339.6 |
| Comparative Example 2 | 7.4 | 0.5 | 1.1 | 3.7 | - | 334.3 |
| Comparative Example 3 | 12.6 | 0.4 | 1.2 | 4.5 | - | 314.1 |
| Comparative Example 4 | 6.6 | 1.4 | 6.5 | 20.8 | 0.5 | 312.4 |
| Comparative Example 5 | 13.2 | 1.5 | 4.9 | 10.7 | 0.5 | 346.0 |
| Comparative Example 6 | 6.6 | 1.4 | 6.5 | 20.8 | - | 308.9 |
| Comparative Example 7 | 13.2 | 1.5 | 4.9 | 10.7 | - | 340.7 |

As shown in Table 1, the non-aqueous electrolyte energy storage device of Example 1, in which positive electrode active material particles having a D50 particle size of 3 µm or less and a BET specific surface area of 10 m²/g or less were used, and the non-aqueous electrolyte contained LiFOP, which is a salt having an oxalato complex anion, had a direct current resistance (DCR) of 300 mΩ or less, and had a low resistance.

On the other hand, the non-aqueous electrolyte energy storage devices of Comparative Examples 1 to 7, which did not satisfy at least one of a condition that the D50 particle size of the positive electrode active material particles is 3 µm or less, a condition that the BET specific surface area of the positive electrode active material particles is 10 m²/g or less, or a condition that the non-aqueous electrolyte contains a salt having an oxalato complex anion, all had a direct current resistance (DCR) exceeding 300 mΩ. In addition, when sieving was performed on particles in which secondary particles of a positive electrode active material including LFP were coated with a carbon material, as in the positive electrode active material particles used in Comparative Examples 4 to 7, the obtained positive electrode active material particles had large particle sizes (D10 particle size, D50 particle size, and D90 particle size). This is considered to be because the particles in which secondary particles of the positive electrode active material including LFP were coated with the carbon material aggregated with each other after sieving.

### INDUSTRIAL APPLICABILITY

The present invention can be applied to a non-aqueous electrolyte energy storage device and the like used as a power source for electronic devices, such as personal computers and communication terminals, for automobiles and the like.

### DESCRIPTION OF REFERENCE NUMERALS

1 Non-aqueous electrolyte energy storage device
2 Electrode body
3 Container
4 Positive electrode terminal
41 Positive electrode lead
5 Negative electrode terminal
51 Negative electrode lead
20 Energy storage unit
30 Energy storage apparatus

## Claims

1. A non-aqueous electrolyte energy storage device, comprising:
a positive electrode containing positive electrode active material particles including a compound having an olivine-type crystal structure; and
a non-aqueous electrolyte containing a salt having an oxalato complex anion, wherein
a D50 particle size of the positive electrode active material particles is 3 µm or less, and
a BET specific surface area of the positive electrode active material particles is 10 m²/g or less.

2. The non-aqueous electrolyte energy storage device according to claim 1,
wherein a D90 particle size of the positive electrode active material particles is 8 µm or less.

3. The non-aqueous electrolyte energy storage device according to claim 1 or 2, wherein the positive electrode active material particles include a carbon material present on at least part of surfaces thereof.

4. The non-aqueous electrolyte energy storage device according to claim 1 or 2, wherein the compound having an olivine-type crystal structure is lithium iron phosphate.

5. The non-aqueous electrolyte energy storage device according to claim 1 or 2, wherein the salt having an oxalato complex anion is lithium difluorobis(oxalato)phosphate.

6. A method for manufacturing a non-aqueous electrolyte energy storage device, comprising:
pulverizing secondary particles of a positive electrode active material including a compound having an olivine-type crystal structure, thereby obtaining positive electrode active material particles having a D50 particle size of 3 µm or less and a BET specific surface area of 10 m²/g or less;
producing a positive electrode containing the positive electrode active material particles; and
preparing a non-aqueous electrolyte containing a salt having an oxalato complex anion.
